# EUROPEAN PATENT APPLICATION

(11) **EP 1 030 321 A1**
(43) Date of publication of application: **23.08.2000**
(21) Application number: 00200313.5
(22) Date of filing: 31.01.2000
(51) Int. Cl.: H01G 2/18

(54) **Improved self-regenerable capacitor**

(30) Priority: 18.02.1999 IT MI990322
(71) Applicant: ICAR S.p.A.-Industria Condensatori Applicazioni Elettroelettroniche, 20123 Milano (IT)
(72) Inventor: Folli, Francesco, 20145 Milan (IT)
(74) Representative: Zanardo, Giovanni

(57) **Abstract**

An improved self-regenerable capacitor comprising a metal membrane or lid (10), shaped in such a way as to enable deformation of the latter in the event of increase in the internal pressure caused by the gas that is produced as a result of a failure, a support (12) made of insulating material, which has the dual function of housing inside it the electrical connections (13) with a winding (19) and of housing a plurality of interruptible conductors (20). The interruptible conductors (20) are soldered to an external contact block (15) so that the lid (10) and the insulating support (12) are fixed together to form a single whole. Finally, the complete capacitor is located inside a metal casing (16) and rests on an insulating shell (17).

## Description

The present invention refers to an improved self-regenerable capacitor.

It is known that self-regenerable capacitors usually comprise a capacitive unit which envisages a winding made up of two films of insulating material and provided with two electrodes to which is applied a coating metal. Each winding is surrounded by a containment material and is housed in a first container.

Mounted in a second casing is a protective element made up of at least one membrane which, under the pressure exerted by the gas produced by a short circuit inside the winding, is activated, separating itself from one end of the winding on account of the fact that a current-interrupting element is provided which is connected in series to one of the electrical connections.

As is known, when the metallized film of a self-regenerable capacitor fails, the short circuit is automatically repaired owing to the fact that, when the short circuit is set up, the current intensity increases rapidly at the point of failure, and this rapid increase converts the metal deposited around the failure point into a gas, which is emitted upwards. Since in this case the metal connection around the failure point is absent, insulation is restored, and the capacitor resumes its normal operation.

The process of self-regeneration is very short and the insulated surface extremely restricted, and consequently a large number of regenerations can occur before any lack of compliance with the specifications or any negative effects on the electrical characteristics of the capacitor are noted.

When the discharges increase abnormally and insulation can no longer be restored at the failure points, the intense production of gas inside the device causes a rapid decrease in the capacitance of the capacitor, and this is a sign that the device has reached the end of its service life.

The protective element of a self-regenerable capacitor is represented by an electrical conductor that can be interrupted by overpressure in such a way that the gas produced by the regenerations can act on the membrane set above the winding, and the swelling deriving from the pressure exerted by the gas on the membrane causes the electrical conductor connected to the electrodes to break, consequently interrupting current flow in the winding.

At present, the protective interruptible conductors of self-regenerable capacitors in use are directly fixed between each electrode and the swellable membrane of the covering shell, and this causes considerable problems, above all in so far as any deformations in and possible damage to the winding may be directly transferred to the protective interruptible conductors, thus causing poor operation of the latter.

In addition, the electrical connection between the protective elements and the metal covering shell may be made only after an operation of external curling of the rim has been carried out.

One purpose of the present invention is therefore that of eliminating the technical problems referred to by making an improved self-regenerable capacitor which makes possible the prevention of any damage to the protection element resulting from deformations in or damage to the winding, such as elongation of the central portion or emission of molten material out of the ends.

Another purpose of the invention is to make an improved self-regenerable capacitor which enables a compact, manageable and integratable assembly to be obtained within a single containing unit.

A further purpose of the present invention is to make a reliable and safe self-regenerable capacitor in a basically simple way and with contained costs as compared to traditional solutions.

These and other purposes according to the present invention are achieved by making an improved self-regenerable capacitor according to Claim 1, to which the reader is referred for reasons of brevity.

Advantageously, it is possible to integrate in a single unit the functions of spacer, interruptible conductor and hermetic-seal lid, so as to obtain a compact and manageable assembly, at the same time separating the functions of connection and interruption in order to make possible perfect operation of the capacitor device even in the case where deformations come about in the winding.

Furthermore, it is possible to use cables for the internal connections between the capacitor devices that have a section different from that of the electrical conductors used for the interruptible elements, it being possible to verify, prior to the final curling operation, that the interruptible conductors are properly tensioned. Finally, the external casing does not require a resting groove, as instead do traditional devices, in that this function is performed by the capacitor itself.

Further characteristics and advantages of an improved self-regenerable capacitor according to the present invention will emerge more clearly from the ensuing description, which is given to provide a non-limiting example, of a preferred embodiment, with reference to the schematic drawings attached, in which:

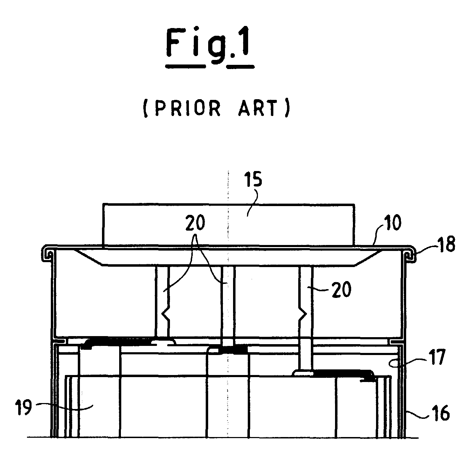

- Figure 1 is a cross-sectional view of a self-regenerable capacitor of a traditional type;

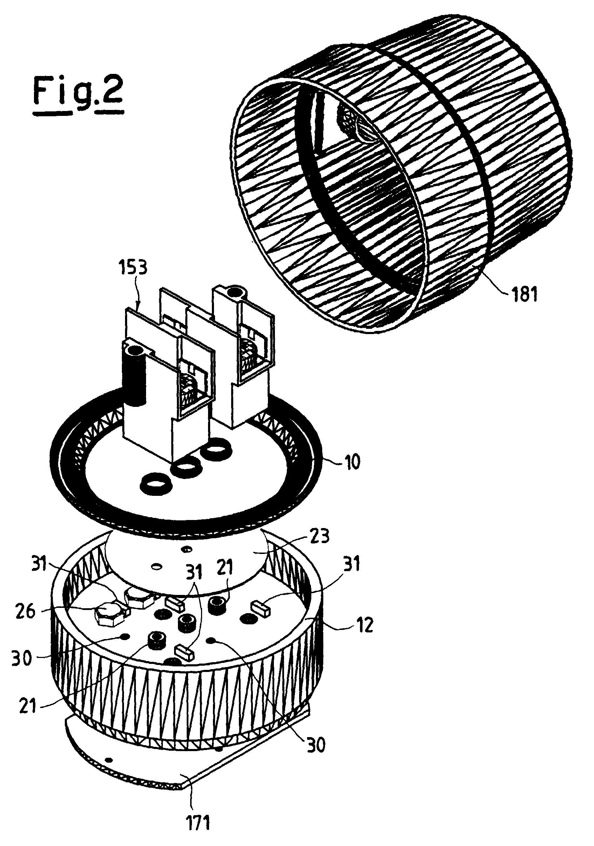

- Figure 2 is an exploded perspective view of one first embodiment of an improved self-regenerable capacitor according to the invention;
- Figure 3 is a cross-sectional view of the improved self-regenerable capacitor according to the present invention shown in Figure 2;
- Figure 4 is a plan view of an element of the improved self-regenerable capacitor according to the invention shown in Figure 2
- Figure 5 is a cross-sectional view of a second embodiment of an improved self-regenerable capacitor according to the present invention; and
- Figure 6 is a plan view of an element of the embodiment shown in Figure 5 of the self-regenerable capacitor according to the invention.

With reference to the above figures, the reference number 10 designates a metal membrane or lid shaped in such a way as to enable its deformation in the event of increase in the internal pressure caused by a possible short circuit. The said lid 10 rests on a support 12 made of insulating material which has the dual function of housing, in such a way as they are separated from the lid 10 by means of an insulating pressboard 23, the electrical connections 13 to a winding 19, and of housing a set of interruptible conductors 20.

The interruptible conductors 20 are connected, by means of soldering, to an external contact block 15 in order to render the lid 10 and the insulating support 12 a single whole. The contact block 15 is made up, in alternative and preferred embodiments, of a series of terminal boards 153, or else, a plurality of screw-terminal connections 154.

Each interruptible conductor 20, which comes from one of the holes 21 or 121 of the insulating support 12 and makes contact with the terminations of the lid 10 which correspond to each external contact block 15, whether this be of the terminal-board type or of the screw-terminal connection type, is connected to the electrical connections 13 via a terminal 22, which is connected to a nut 27 tightened on a bolt 26.

Finally, holes 30 are provided, designed for reciprocal connection of the terminations corresponding to the external contact blocks 15 and means of fastening 31 of the bolts 26 in position.

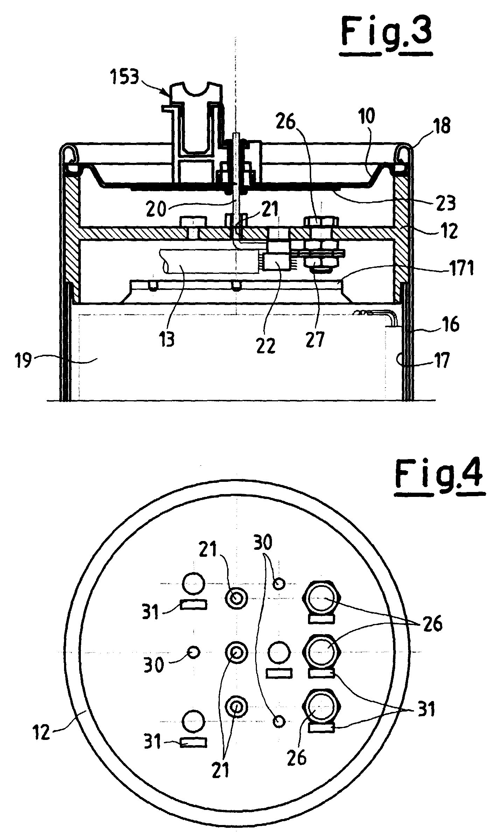

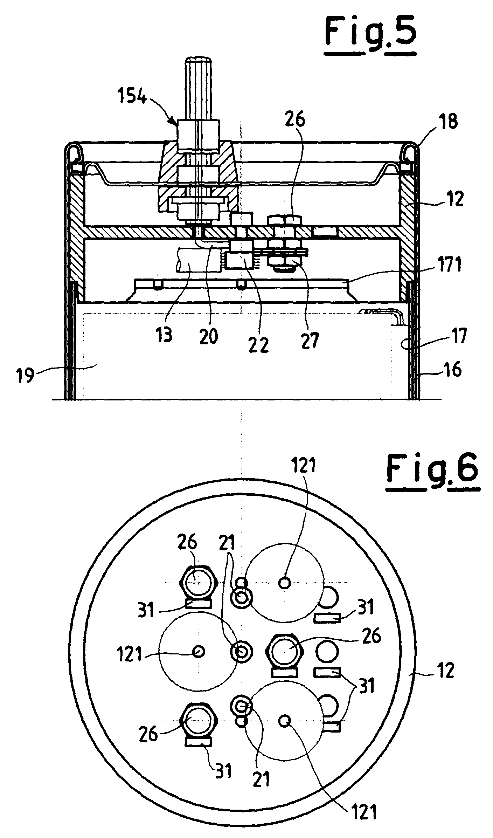

As represented in Figures 4 and 6, by providing on one and the same insulating support 12 a set of four shaped holes in three parallel rows, it is possible to use the said single support 12 for different embodiments of the capacitor, in particular for the ones represented in Figures 3-4 and 5-6, corresponding, respectively, to a terminal-block connection 153, the three contacts of which on the nuts 27 of the terminals 22 are arranged so that they are aligned, with one in each row, and to a screw-terminal connection 154, the terminations of which corresponding to the holes 121, as likewise the electrical contacts of the nuts 27 on the terminals 22, are arranged at the vertices of an equilateral triangle.

The capacitor device thus constructed is positioned inside a metal casing 16 and rests on an insulating shell 17.

A subsequent operation of outer curling 18 bestows on the structure a further function of sturdiness and compactness. Finally, the hermetic seal of the capacitor is made by mounting the insulating support 12 on a fastening board 171 and by closing the entire structure inside a containment cap 181. In this way, the functions of spacer, interruptible conductor and hermetic-seal lid are integrated in a single assembly or structure containing the capacitor device.

In addition, unlike in traditional self-regenerable capacitors, the connection between the winding 19 and the rest of the device is made by means of flexible cables 13, and not by means of interruptible conductors 20, in such a way that the functions of connection and interruption are clearly separated, so as to achieve perfect operation of the device even in the case where deformations occur directly on the winding 19, such as a possible elongation of the central portion or the emission of melting material from the ends of the coil of the winding 19. This characteristic likewise enables the use of conductors having a different cross section for the internal electrical connections between the capacitor devices and the leads that are usable for the interruptible conductor 20.

In conclusion, the protection element, which is represented by the interruptible conductor 20, is mechanically separated from the winding 19, thus enabling the creation of a compact and manageable assembly, and furthermore enabling verification, prior to the operation of final curling, to ensure that the interruptible conductors 20 are properly tensioned, because the connection (soldering) between the protection elements 20 and the lid 10 can be made before carrying out the operation of external curling 18.

Finally, the outer casing 16 of the capacitor does not require a resting groove in that this function is performed by the device itself.

The characteristics of the improved self-regenerable capacitor which forms the subject of the present invention, as well as its advantages, emerge clearly from the foregoing description.

In particular, the advantages are the following:
- compactness and manageability of the structure;
- perfect operation of the device even in the case of possible deformations of the winding;
- precision in calibration as regards the tensioning of the interruptible conductors, which can be performed prior to the operation of final curling;
- possibility of using conductors of different section for internal connections and for the interruptible conductors;
- hermetic sealing of the capacitor;
- reliability and simplicity of construction owing to the advantages achieved as compared to the known art;
- substantially contained costs.

It is clear that numerous other variations may be made to the self-regenerable capacitor which is the subject of the present invention, without thereby departing from the principles of novelty inherent in the inventive idea.

It is also clear that, in the practical implementation of the invention, the materials, shapes and dimensions of the items illustrated may be of any kind according to the requirements, and they can be replaced by other technically equivalent ones.

## Claims

1. Self-regenerable capacitor, of the type comprising at least one capacitive unit which contains at least one winding (19) associated to a plurality of electrodes and at least one protection element (20) which can be activated by means of a pressure exerted on a covering membrane (10) by a gas produced by a failure inside the said winding (19), the said covering membrane (10) separating itself from at least one end of the said winding (19), characterized in that the said protection element (20) is housed inside an insulating support (12), where means (13, 22) of electrical connection with the said winding (19) are provided, and is connected to at least one contact means (15) external to the said membrane (10).

2. Self-regenerable capacitor according to Claim 1, characterized in that the said contact means (15) consists of at least one terminal board (153) or at least one screw-terminal connector (154).

3. Self-regenerable capacitor according to Claim 1, characterized in that the said covering membrane (10) is made so that it is fixed to and rests upon the said insulating support (12), integrating in a single assembly or structural unit every function of the capacitor.

4. Self-regenerable capacitor according to Claim 1, characterized in that the said means (13, 22) of electrical connection comprise flexible conductors and terminals fixed to the said insulating support (12) by fastening means (26, 27, 31).

5. Self-regenerable capacitor according to Claim 1, characterized in that the said protection element (20) is mechanically separate from the said winding (19) and consists essentially of at least one interruptible cable or conductor for overpressure passing through apertures (21, 121) which are arranged in pre-set points of the said insulating support (12).

6. Self-regenerable capacitor according to Claim 5, characterized in that cables or conductors of different cross section are provided for the internal connections between the capacitor devices and the said cables or interruptible conductors.

7. Self-regenerable capacitor according to Claim 1, characterized in that it is positioned inside a metal casing (16) and rests upon an insulating shell (17).

8. Self-regenerable capacitor according to Claim 7, characterized in that a subsequent operation of curling (18) enables a function of hermetic sealing of the said capacitor to be provided.

9. Self-regenerable capacitor according to Claims 5 and 8, characterized in that a connection between the said protection element (20) and the said contact means (15) external to the said covering membrane (10) may be made before the said operation of curling (18) so as to enable prior verification to ensure that the said interruptible conductors are properly tensioned.
